# EUROPÄISCHE PATENTSCHRIFT

(11) **EP 1 943 709 B1**
(45) Veröffentlichungstag und Bekanntmachung des Hinweises auf die Patenterteilung: **14.12.2011**
(21) Anmeldenummer: 06806485.6
(22) Anmeldetag: 24.10.2006
(51) Int. Cl.: H02K 1/14, H02K 1/18, H02K 15/02

(54) **ELEKTROMOTOR**
ELECTRIC MOTOR
MOTEUR ELECTRIQUE

(30) Priorität: 26.10.2005 DE 102005051506
(43) Veröffentlichungstag der Anmeldung: 16.07.2008
(73) Patentinhaber: SEW-EURODRIVE GmbH & Co. KG, 76646 Bruchsal (DE)
(72) Erfinder: RHODE, Stephan, 76139 Karlsruhe (DE)
(86) Internationale Anmeldenummer: PCT/EP2006/010218
(87) Internationale Veröffentlichungsnummer: WO 2007/048567

(56) Entgegenhaltungen:
- EP-A1- 0 833 427
- DE-A1- 19 857 954
- JP-A- 10 136 621
- JP-A- 11 341 716
- US-A1- 2004 189 137

## Beschreibung

Die Erfindung betrifft einen Elektromotor und ein Verfahren zum Herstellen eines Elektromotors.

Aus der EP 1 322 021 B1 ist ein Stator bekannt, bei dem die Zähne des Stators axial eingeschoben werden in einen hohlzylindrischen Ringkörper. An den beiden Enden werden Kappen aufgesteckt, die elektrische Steckverbindungen umfassen. Nachteilig ist die große Masse und daher kostspielige Fertigung des Motors.

Aus der US 6 226 856 B1 ist ebenfalls ein Stator bekannt, bei dem die Zähne des Stators axial ineinander eingeschoben werden.

Aus der US 6 359 355 B1 ist ein Stator bekannt, bei dem zwar die Segmente radial zusammengeführt werden, jedoch werden sie gehalten durch ein umgebendes "circular pattern 28".

Aus der DE 198 57 954 A1 ist ein Gleichstrommotor bekannt, bei dem Zahnsegmente radial zusammenschlebbar sind.

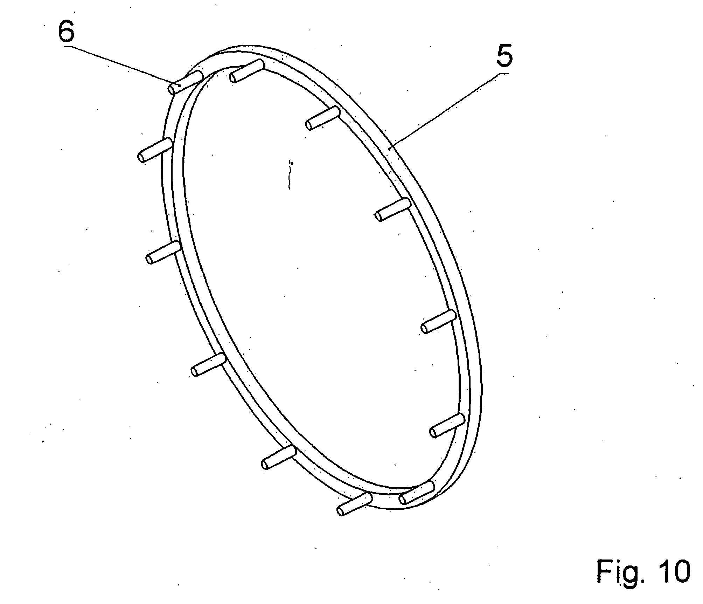

Aus der EP 0 833 427 A1 ist ein Elektromotor bekannt, der einem Stator umfasst (Ausführugsbeispiel gemäß Abb. 10), der aus stanzpaketierte Zahnsegmenten zusammengesetzt ist, wobei die Zahnsegmente radial zusammengeschoben sind und durch axial aufgeschobene Halteteile zusammengehalten werden. Aus einem anderen Ausführugsbeispiel (Abb. 16) ist ein stator mit Zahnsegmenten bekannt, welche axial aufgeschobene Endkappen aufweisen.

Aus der JP 11341716 A ist ein Feder-Nut-System bekannt, bei dem die Form der Feder pfeilförmig, rechteckig oder rund ausgeführt ist.

Der Erfindung liegt daher die Aufgabe zugrunde, eine Vorrichtung weiterzubilden, wobei die Herstellung eines Elektromotors und einer zugehörigen Baureihe vereinfacht werden soll und der Umweltschutz verbessert werden soll.

Erfindungsgemäß wird die Aufgabe durch die in Anspruch 1 angegebenen Merkmale gelöst.

Wesentliche Merkmale der Erfindung bei dem Elektromotor sind, dass er einen Stator, der aus stanzpaketierten Zahnsegmenten zusammengesetzt ist, umfasst, wobei die Zahnsegmente Nut und Feder aufweisen zum gegenseitige Formschlüssigen Verbinden in Umfangsrichtung wobei die Zahnsegmente radial zusammen geschoben sind und durch axial aufgeschobene Halteteile zusammen gehalten werden, wobei jedes Zahnsegment eine axial aufgeschobene Endkappe aufweist, die Rillen zur Drahtführung aufweist, und wobei jedes Zahnsegment mit axial aufgeschobener Endkappe mit einer Wicklung aus Draht bewickelt ist. Von Vorteil ist dabei, dass weniger Masse für das Statorpaket notwendig ist, insbesondere kein die Zahnsegmente umgebender Ring zum aufschrumpfenden Halten der Zahnsegmente. Somit ist der Umweltschutz verbessert. Außerdem ist die Fertigung schnell und einfach möglich sowie hoch automatisiert und somit kostengünstig. Denn es werden die Segmente einfach radial zusammengeschoben und dann Halteteile axial aufgesteckt.

Weiter ist von Vorteil, dass das Statorpaket in verschiedene Gehäusesysteme als vormontierte Einheit einsetzbar ist, dadurch verbessert sich die Flexibilität und die Baukastenvielfalt. Denn es muss nur ein Statorpaket im Lager vorgehalten werden für mehrere verschiedene Gehäusearten des gesamten Elektromotors.

Erfindungsgemäß weisen die Zahnsegmente Nut und Feder auf zum gegenseitigen Formschlüssigen Verbinden in Umfangsrichtung. Von Vorteil ist dabei, dass durch einfaches Ausformen der Zahnsegmente ein Formschluss in Umfangsrichtung erzeugbar ist. Wegen der Stifte der Halteteile wären theoretisch nur Drehungen der Zahnsegmente um die Stifte herum möglich. Da aber Nut und Feder derart ausgeführt sind, dass sie in Umfangsrichtung ineinander einführbar sind, ist eine radiale Bewegung verhindert. Denn dies wird bewirkt durch die in Umfangsrichtung beidseitige Anordnung des Nut-Feder-Formschlusses.

Erfindungsgemäß weist jedes Zahnsegment eine axial aufgeschobene Endkappe auf umfassend Rillen zur Drahtführung. Von Vorteil ist dabei, dass die Form der Wicklung besser beeinflussbar ist und somit ein hoher Kupferfüllungsgrad erzeugt werden kann. Dadurch wird eine hohe Ausnutzung des Motors erreicht und Verluste des Motors werden minimiert.

In der vorliegenden Schrift wird das Statorpaket auch der Einfachheit halber als Stator bezeichnet.

Bei einer vorteilhaften Ausgestaltung sind die Halteteile formschlüssig verbunden mit den Zahnsegmenten. Von Vorteil ist dabei, dass wesentliche Teile der Haltekraft von einem einfachen axial aufsteckbaren Zusatzteil erzeugbar sind.

Bei einer vorteilhaften Ausgestaltung sind die Halteteile mit Stiften in Löcher der Zahnsegmente eingesteckt. Insbesondere sind die Stifte in axialer Richtung orientiert. Von Vorteil ist dabei, dass das Halteteil einfach herstellbar ist und mit einfachen Verbindungsmitteln genügend große Stabilität des Stators herstellbar ist.

Bei einer vorteilhaften Ausgestaltung umfassen die Halteteile elektrische Verbindungen zum Herstellen der Verschaltung der Wicklungen der einzelnen Zahnsegmente. Insbesondere weisen beispielsweise die Halteteile ein kunststoffumspritztes Stanzgitter auf. Von Vorteil ist dabei, dass die Verschaltung, also das Herstellen der Reihen- oder Parallelschaltung, besonders schnell und einfach ausführbar ist. Das Halteteil kann auch mit Steckkontakten ausgeführt werden zum elektrischen Steckverbinden mit Leitungen. Die Zungen der Steckkontakte sind dabei Teile des umgebogenen Stanzgitters, also eines Stanz-Biege-Gitters statt eines Stanzgitters.

Weitere Vorteile ergeben sich aus den Unteransprüchen.

### Bezugszeichenliste

- 1: Zahnsegment, stanzpaketiert
- 2: Loch
- 3: Feder
- 4: Nut
- 5: Halteteil
- 6: Stift
- 7: Stator, komplett
- 8: Erhebung
- 9: Isolierpapier
- 10: Endkappe
- 11: Spulenstütze
- 12: Rillen
- 13: Drahtführung
- 14: Wicklung

Die Erfindung wird nun anhand von Abbildungen näher erläutert:

Der erfindungsgemäße Motor umfasst einen Stator, der aus zumindest Zahnsegmenten besteht.

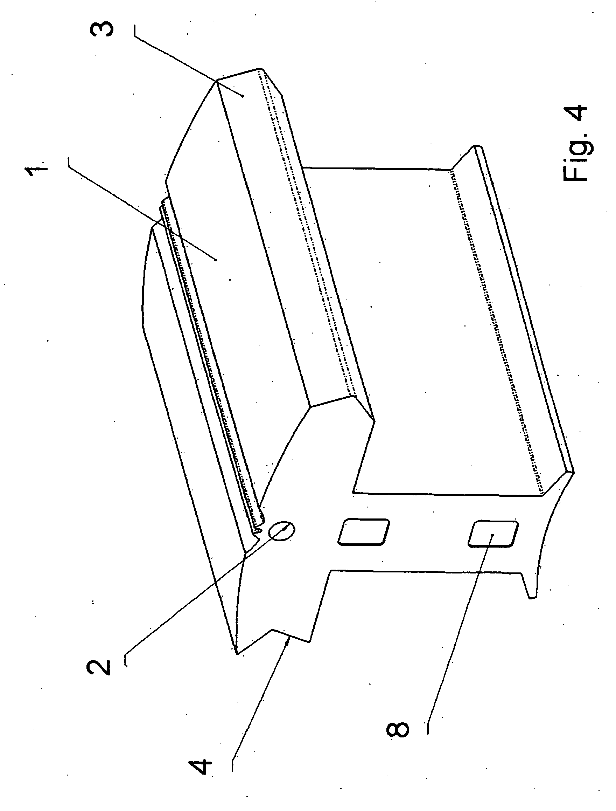

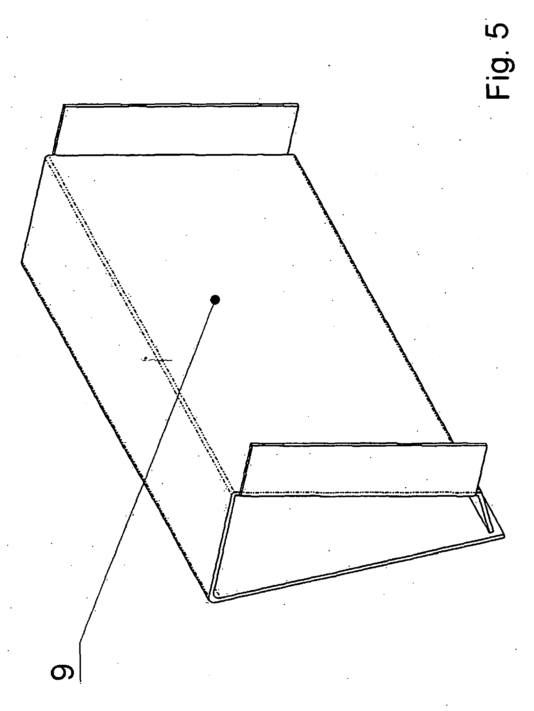

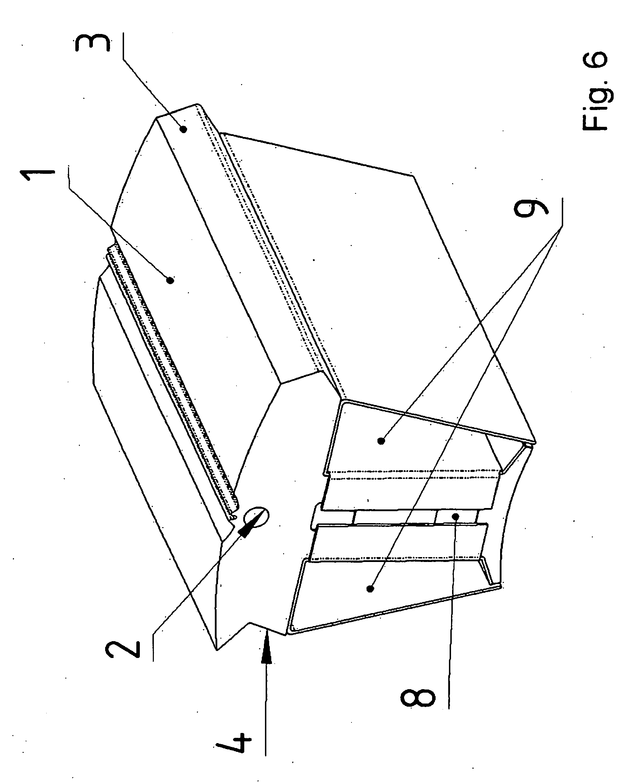

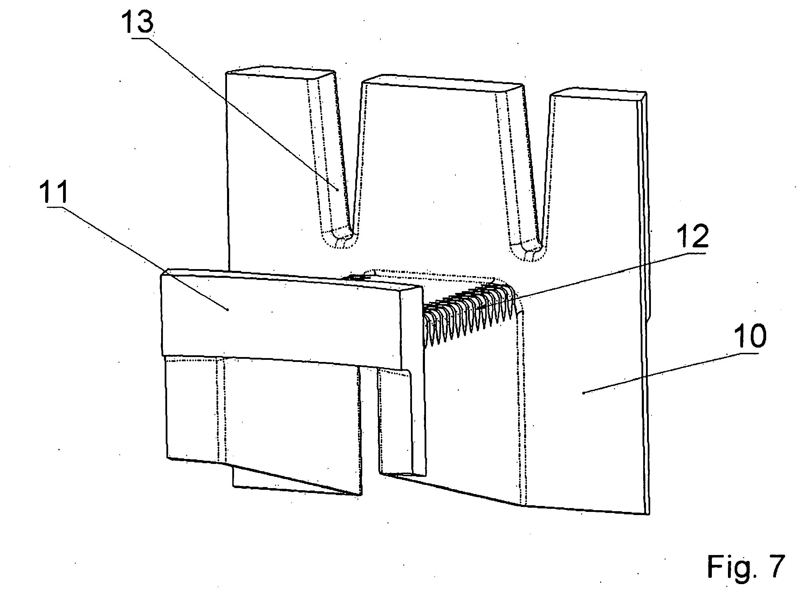

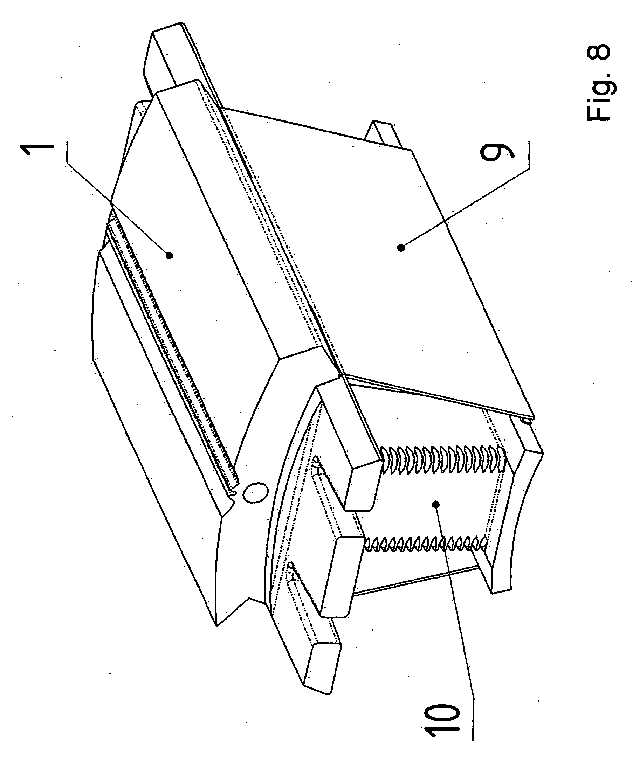

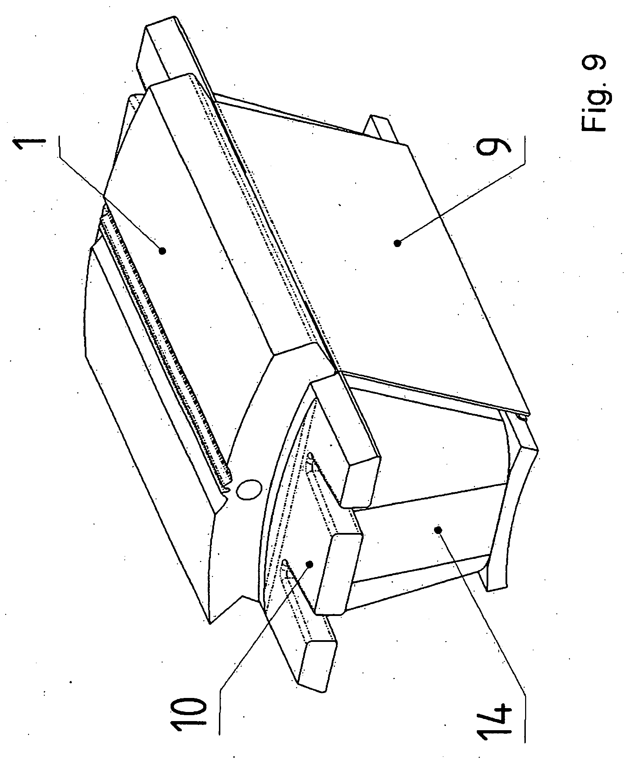

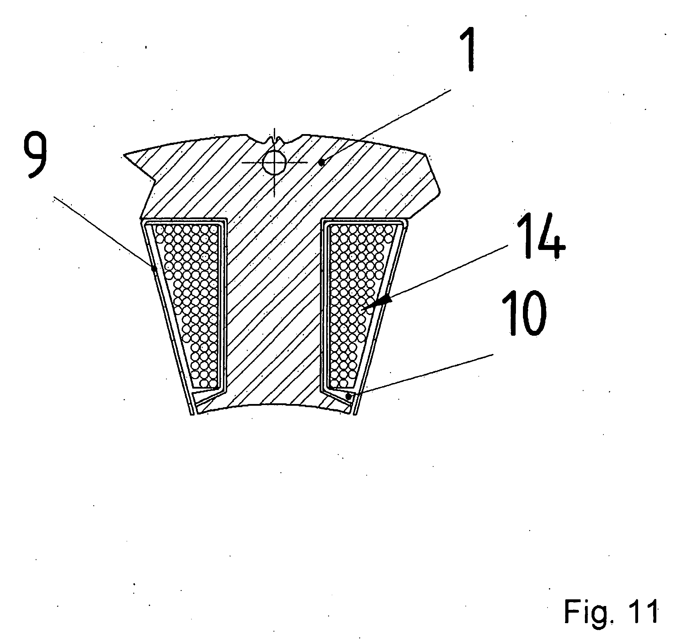

In den Figuren 4 bis 11 ist die Fertigung des fertig bewickelten Zahnsegmentes der Reihenfolge nach dargestellt.

In den Figuren 1 bis 3 ist das Zusammensetzen des Stators aus den Zahnsegmenten dargestellt.

Im Folgenden werden die Figuren der Reihe nach näher beschrieben:

In der Figur 4 ist ein Zahnsegment 1 dargestellt. Es weist eine Nut 4 und eine Feder 3 auf und eine Erhebung 8, die durch das Stanzpaketieren erzeugt ist. Außerdem ist ein Loch zum Einstecken von Stiften 6 vorgesehen.

In der Figur 5 ist das Isolierpapier 9 zu sehen, welches auf das Zahnsegment aufgeschoben wird.

In der Figur 6 ist das Zahnsegment 1 mit aufgeschobenem Isolierpapier 9 gezeigt.

In der Figur 7 ist eine Endkappe 10 gezeigt, welche Rillen 12 für die Drahtführung aufweist und eine Spulenstütze 11 zum Sichern der Wicklung sowie Ausnehmungen als Drahtführungen 13.

In der Figur 8 ist ein Zahnsegment mit aufgeschobenen Endkappen 10 gezeigt.

In der Figur 9 ist ein danach mit der Wicklung 14 bewickeltes Zahnsegment gezeigt.

In der Figur 10 ist das Halteteil 5 mit den Stiften 6 gezeigt. Die Stifte 6 sind in axialer Richtung hervorragend und orientiert gezeigt. Vorzugsweise ist das Halteteil 5 aus Kunststoff.

In der Figur 11 ist ein Schnitt durch das fertig bewickelte Zahnsegment 1 zu sehen. Die Wicklung 14 ist von Isolierpapier 9 umgeben.

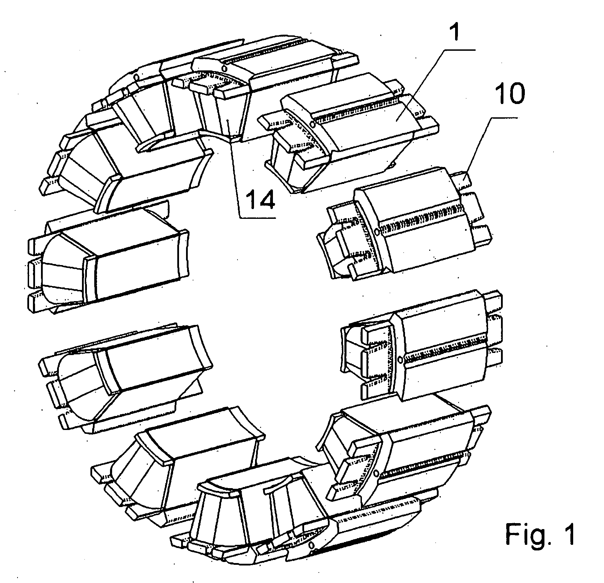

In der Figur 1 sind die stanzpaketierten fertig bewickelten Zahnsegmente 1 gezeigt, welche bei der Herstellung des Stators radial zusammengeschoben werden. Dabei treffen jeweilige Nut 4 und Feder 3 benachbarter Zahnsegmente aufeinander und sichern somit die Verbindung der jeweiligen zwei Zahnsegmente in radialer Richtung.

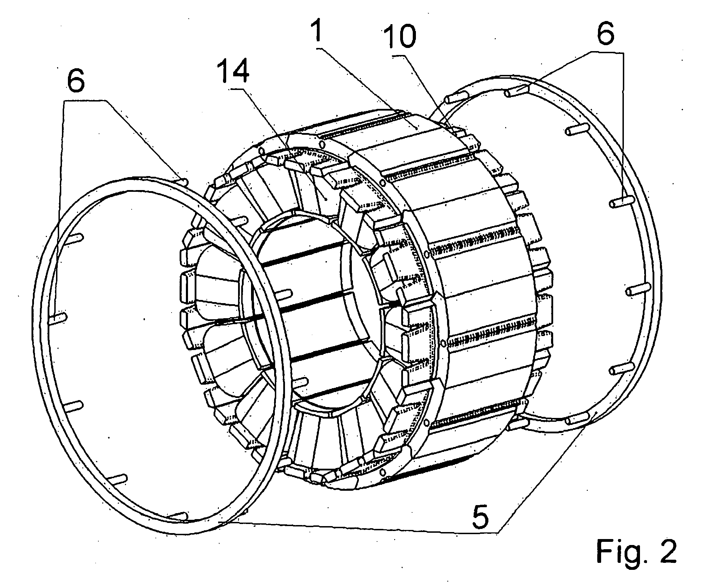

In Figur 2 ist dargestellt, wie die Halteteile 5 an den axialen Endbereichen in axialer Richtung aufgeschoben werden und mit ihren Stiften 6 formschlüssig verbunden werden mit den Zahnsegmenten. Dazu werden Stifte 6 in Löcher 2 der Zahnsegmente eingeführt.

Somit geben die Halteteile 5 dem Stator die zylindrische Form und halten ihn zusammen. Einerseits begrenzen sie dabei die axiale Bewegungsfreiheit der Zahnsegmente 1 und andererseits verhindern sie ein radiales Bewegen der Zahnsegmente weg von den Stiften 6. Denn die Stifte stecken in den Löchern 2.

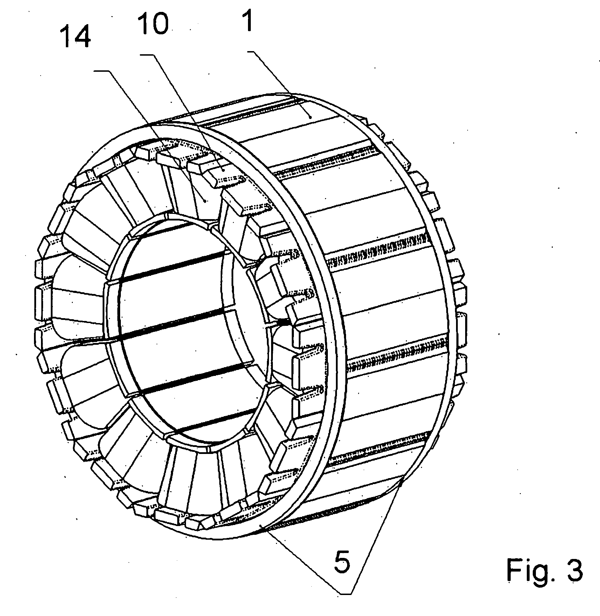

In der Figur 3 ist der Stator zu sehen, bei dem die Halteteile 5 aufgeschoben sind.

Bei weiteren erfindungsgemäßen Ausführungsbeispielen ist statt des als Ring mit Stiften ausgeführten Halteteils 5 auch ein anders geformtes und mit weiteren Funktionen versehenes Teil verwendbar. Dabei ist das Teil beispielsweise auch als Kappe ausführbar. Weiter ist es auch mit elektrischen Verbindungen, die in dem Halteteil integriert sind ausführbar. Besonders vorteilhaft ist dabei eine Ausführung mit einem Stanzgitter, das kunststoffumspritzt wird und somit als Halteteil erzeugt wird. Dabei ist das Stanzgitter derart ausgeführt, dass durch Stanzen des Halteteils die Verschaltung erzeugbar ist. Dazu werden jeweils verschiedene Bereiche aus dem Halteteil herausgestanzt und somit das restliche Stanzgitter zum Verschalten vorgesehen.

## Patentansprüche

1. Elektromotor, umfassend einen Stator (7), der aus stanzpaketierten Zahnsegmenten (1) zusammengesetzt ist,
wobei die Zahnsegmente Nut (4) und Feder (3) aufweisen zum gegenseitigen Formschlüssigen Verbinden in Umfangsrichtung,
wobei die zahnsegmente radial zusammen geschoben sind und durch axial aufgeschobene Halteteile (5) zusammen gehalten werden,
wobei jedes Zahnsegment eine axial aufgeschobene Endkappe (10) aufweist, die Rillen (12) zur Drahtführung (13) aufweist,
und wobei jedes Zahnsegment mit axial aufgeschobener Endkappe mit einer Wichlung aus Draht bewichelt ist.

2. Elektromotor nach Anspruch 1,
**dadurch gekennzeichnet, dass**
die Halteteile (5) formschlüssig verbunden sind mit den Zahnsegmenten (1).

3. Elektromotor nach mindestens einem der vorangegangenen Ansprüche,
**dadurch gekennzeichnet, dass**
die Halteteile (5) mit Stiften in Löcher der Zahnsegmente eingesteckt sind.

4. Elektromotor nach Anspruch 3,
**dadurch gekennzeichnet, dass**
die Halteteile (5) elektrische Verbindungen umfassen zum Herstellen der Verschaltung der Wicklungen (14) der einzelnen Zahnsegmente, insbesondere zum Herstellen der Reihen- oder Parallelschaltung.

5. Elektromotor nach Anspruch 3 oder 4,
**dadurch gekennzeichnet, dass**
die Halteteile (5) ein kunststoffumspritztes Stanzgitter aufweisen.

6. Elektromotor nach mindestens einem der vorangegangenen Ansprüche,
**dadurch gekennzeichnet, dass**
der Stator (7) als vorkomplettiert ausgebildetes Statorpaket in mindestens zwei verschiedene Gehäusesysteme einsetzbar ist, insbesondere zur Erreichung einer hohen Varianz innerhalb einer Baureihe von Elektromotoren mit möglichst wenigen Teilen.

## Claims

1. Electric motor, comprising a stator (7) composed of stamp-packed tooth segments (1),
the tooth segments having groove (4) and tongue (3) for mutual form-locking connection in the circumferential direction,
the tooth segments being pushed together radially and held together by retaining parts (5) pushed on axially,
each tooth segment having an axially pushed-on end cap (10) having grooves (12) for wire guidance (13),
and each tooth segment with axially pushed-on end cap being wound with a winding made of wire.

2. Electric motor according to Claim 1,
**characterised in that**
the retaining parts (5) are connected to the tooth segments (1) in a form-locking manner.

3. Electric motor according to at least one of the preceding claims,
**characterised in that**
the retaining parts (5) are inserted by pegs into holes of the tooth segments.

4. Electric motor according to Claim 3,
**characterised in that**
the retaining parts (5) comprise electrical connections for producing the interconnection of the windings (14) of the individual tooth segments, in particular for producing the series or parallel connection.

5. Electric motor according to Claim 3 or 4,
**characterised in that**
the retaining parts (5) have a stamped grid overmoulded with plastic.

6. Electric motor according to at least one of the preceding claims,
**characterised in that**
the stator (7) is insertable as a pre-completed stator pack into at least two different housing systems, in particular to achieve a high variance within a series of electric motors using as few parts as possible.

## Revendications

1. Moteur électrique, comprenant un stator (7) qui est composé de segments dentés (1) découpés et boutonnés,
les segments dentés présentant une encoche (4) et une languette (3) pour l'assemblage mutuel par complémentarité de formes en direction circonférentielle,
les segments dentés étant poussés l'un contre l'autre en direction radiale et maintenus ensemble par des pièces de maintien (5) enfilées axialement,
chaque segment denté présentant un chapeau terminal (10) enfilé axialement, qui présente des rainures (12) pour le guidage de fils (13),
et chaque segment denté avec chapeau terminal enfilé axialement étant bobiné avec un enroulement en fil métallique.

2. Moteur électrique selon la revendication 1,
**caractérisé en ce que**
les pièces de maintien (5) sont reliées aux segments dentés (1) par complémentarité de formes.

3. Moteur électrique selon au moins une des revendications précédentes,
**caractérisé en ce que**
les pièces de maintien (5) sont enfichées dans des trous des segments dentés avec des goupilles.

4. Moteur électrique selon la revendication 3,
**caractérisé en ce que**
les pièces de maintien (5) comprennent des connexions électriques pour établir la connexion entre les enroulements (14) des différents segments dentés, en particulier pour établir le couplage en série ou en parallèle.

5. Moteur électrique selon la revendication 3 ou 4,
**caractérisé en ce que**
les pièces de maintien (5) présentent une grille estampée surmoulée en matière plastique.

6. Moteur électrique selon au moins une des revendications précédentes,
**caractérisé en ce que**
le stator (7) est utilisable en tant que paquet stator précomplété dans au moins deux systèmes de boîtier différents, en particulier pour atteindre une variance élevée à l'intérieur d'une série de moteurs électriques avec le moins de pièces possibles.
